# EUROPEAN PATENT SPECIFICATION

(11) **EP 3 527 362 B1**
(45) Date of publication and mention of the grant of the patent: **14.10.2020**
(21) Application number: 19157256.9
(22) Date of filing: 14.02.2019
(51) Int. Cl.: B32B 7/04, B32B 7/06, B32B 7/12, B32B 15/04, B32B 15/08, B32B 15/12, B32B 27/08, B32B 27/10, B32B 27/32, B32B 27/36, B32B 29/00, B32B 37/06, B32B 37/12, B32B 3/26

(54) **MULTI-LAYER PRODUCTS**
MEHRSCHICHTIGE PRODUKTE
PRODUITS MULTICOUCHES

(30) Priority: 15.02.2018 GB 201802450
(43) Date of publication of application: 21.08.2019
(73) Proprietor: MEDI-Clear Ltd, Hull HU4 7DX (GB)
(72) Inventor: HOGAN, Mark Paul, Hull HU4 7DX (GB); ELLIOTT, Howard, Hull HU4 7DX (GB)
(74) Representative: Serjeants LLP

(56) References cited:
- EP-A1- 3 398 875
- WO-A1-2005/023670
- WO-A1-2012/049447
- DE-A1-102008 016 033
- US-A1- 2007 205 132

## Description

### Field of the Invention

The invention relates to multi-layer products, and in particular to multi-layer products that include a release layer or coating applied to a layer to allow that layer to be easily released from an adhesive layer.

### Background Art

Self-adhesive (or pressure sensitive) labels typically comprise a first layer (often referred to as a face material), an adhesive layer, and a second layer (often referred to as a liner or backing). Cut lines are provided in the first layer to define the periphery of individual labels. The first layer can include cut lines that define two or more labels. The labels can be arranged in an array on a single sheet or in the form of a roll that might be used with automated label applicator machines, for example. The cut lines can be formed using a die cutter and normally extend all of the way through the first layer and may penetrate part of the way into the adhesive layer, but not into the second layer.

The first and second layers can be formed of any suitable material. A common material is paper but plastics such as polypropylene (PP) and polyethylene terephthalate (PET) are often used to provide improved resistance to tearing.

The first layer can provide a printable surface.

A release layer or coating is applied to a surface of the second layer to allow the self-adhesive labels to be removed easily and cleanly from the second layer. Once a label is removed from the second layer, the exposed adhesive on its underside allows the label to be adhered to a surface as required.

The release coating can be made of any suitable material, but silicone-based coatings are common. Commercial examples include Sly-Off® silicone release coatings supplied by Dow Corning, and Silcolease® silicone release coatings supplied by Elkem Silicones.

For some applications, cut lines can also be provided in the second layer to define the periphery of individual liner portions. The second layer can include cut lines that define two or more liner portions. Often, each liner portion will be associated with a corresponding label. The cut lines in the second layer can be formed using a die cutter and normally extend all of the way through the second layer and may penetrate part of the way into the adhesive layer, but not into the first layer.

WO 2005/023670 describes a seal for use with a container for storing and dispending consumer products. The term consumer products is intended to cover a wide variety of products as illustrated by the following (non-exhaustive) list: foods, either for immediate consumption, pre-cooked, prepared or oven ready, including prepared meals, confectionary, hardware and DIY items, cosmetics, seeds, animal and fish feeds, electronic components, medical appliances and dressings, medicines and medication such as pills, tablets and capsules. The container may be used in place of conventional blister packs for the packaging of pills, tablets and capsules, or may be used for organising and storing mixed medication for subsequent dispensation according to a predefined dosage regimen. The principle behind such mixed medication containers is that a dosage regimen of mixed medication can be organised in advance for a period of a week or more, and a patient or nurse can then remove from the container, at predefined times over the said period, the one or more pills, tablets and/or capsules to be administered on each occasion according to the dosage regimen.

The container includes a tray having a generally planar top surface into which has been formed an array of discrete cavities for receiving the consumer products.

The seal is generally similar in construction to the self-adhesive labels described above. In particular, the seal includes a first layer (or cover film) that is adhered to the generally planar top surface of the tray by a layer of adhesive to seal the cavities to retain the consumer products in the cavities. The cover film is often a flexible sheet of plastics material. The cover film has pre-formed lines of separation defining a releasable portion per cavity to retain the consumer products in that cavity until it is removed. The cover film therefore has a corresponding array of releasable portions. Each line of separation can be a tear line (e.g., a score line or perforation line) that must be torn or broken to release the releasable portion, or a cut line extending completely through the material of the cover film. Each releasable portion of the cover film has low vapour transmission properties in the area which in use overlies the associated cavity, those low vapour transmission properties being created by a barrier patch with high vapour barrier properties shaped and sized to overlie the associated cavity. Each barrier patch is adhered to the underside of the cover film by the same layer of adhesive as that which adheres the cover film to the top surface of the tray.

The array of barrier patches can be created from a single sheet of barrier film (or second layer) as follows. A single sheet of barrier film is adhered to the underside of the cover film by the adhesive layer to form the seal. The barrier film is often a flexible sheet of plastics material. The barrier film has pre-formed lines of separation (e.g., tear lines such as score lines or perforation lines, or cut lines) defining the periphery of each vapour-resistant barrier patch so that peeling away the majority of the barrier film from the cover film immediately prior to application of the cover film to secure it to the generally planar top surface of the tray exposes the adhesive in areas necessary for adhesion to the tray. If the lines of separation are tear lines they will tear when the barrier film is removed to leave a barrier patch attached to the underside of each releasable portion of the cover film.

In a preferred arrangement, the barrier patches are larger than the associated releasable portions of the cover film and are adhered to an overlapping region of the cover film between the pre-formed line of separation in the cover film and the periphery of the associated barrier patch. The barrier patches are not adhered to the generally planar surface of the tray, but only to the cover film.

The cover film is secured to the tray by the same layer of adhesive that is used to secure the cover film to the barrier film. After the majority of the barrier film has been peeled away from the cover film to expose the adhesive, the cover film can be secured to the top surface of the tray. Although not described in WO 2005/023670, the skilled person will understand that a release layer or coating will normally be applied to a surface of the barrier film so that it can be released easily from the adhesive layer. Although the individual barrier patches remain adhered to the cover film, the presence of the release coating between each barrier patch and the adhesive layer also means that they can sometimes be separated relatively easily from the associated releasable portion.

It can be seen that there are broad similarities between the self-adhesive label and the seal described above. In particular, the releasable portions of the cover film correspond generally to the individual labels cut in the first layer (or face material) of the self-adhesive label stock and the barrier patches correspond generally to the liner portions. The only difference is that in the case of the seal, the majority of the barrier film is peeled away from the cover film to allow the cover film to be adhered to the generally planar top surface of the tray using the exposed adhesive on the underside of the cover film. The releasable portions in the cover film are only removed or released from the remainder of the cover film when the contents of the underlying cavity are to be dispensed.

Other seals are disclosed in WO 2012/049447, DE 102008016033, US 2007/205132 and EP 3398875.

### Summary of the Invention

The present invention provides a multi-layer product according to claim 1.

The release layer allows the part of the second layer that lies outside the one or more second portions (i.e., outside the pre-formed lines of separation in the second layer) to be released easily from the adhesive layer. Removing this part of the second layer will expose part of the adhesive layer. As the second layer is released, it separates (or tears) along the pre-formed lines of separation in the second layer means such that the or each second portion will remain adhered to the adhesive layer. The or each second portion could also be released or peeled away from the adhesive layer because of the release layer if it wasn't for the fact that the or each second portion is fixedly secured to the associated first portion at the one or more securing locations.

The first and second portions are preferably fixedly secured to the extent that they cannot be fully released from each other without physically tearing them apart. Put another way, they are preferably fixedly secured to the extent that they will not be easily released during normal usage of the multi-layer product and a deliberate attempt will normally need to be made in order to separate them completely.

In one arrangement, the first and second portions can be fixedly secured by welding them together at the one or more securing locations, e.g., using ultrasonic spot welding, friction welding or heat welding using a heat gun.

In another arrangement, the first and second portions can be fixedly secured using the adhesive layer. This can be done by the release layer being absent at the one or more securing locations so that the or each second portion is firmly and directly adhered to the adhesive layer at each securing location, and hence by means of the adhesive layer, to the associated first portion.

In another arrangement, the first and second portions can be fixedly secured using the adhesive layer and the release layer. This can be done by modifying the chemical properties of the release layer at the one or more securing locations, e.g., by selectively applying a chemical such an adhesive primer to the release layer, so that instead of releasing easily from the adhesive layer, those parts of the release layer to which the chemical is selectively applied are firmly adhered to the adhesive layer. Put another way, the release layer effectively no longer has any "release" property in those areas to which the chemical is selectively applied. Since the release layer is firmly adhered to the second layer, it means that the or each second portion is firmly adhered to the associated first portion by means of the adhesion between the release layer and the adhesive layer. This can also be done by selectively applying a coating (e.g., a curable coating or similar) to the release layer at the one or more securing locations. If the coating is firmly adhered to both the release layer and the adhesive layer, it means that the or each second portion is firmly adhered to the associated first portion by means of the adhesion between the release layer and the adhesive layer.

The or each pre-formed line of separation in the first and second layers can be formed by a pre-scored or pre-perforated tear line, a cut line, or a combination thereof. Lines of separation can be formed using die cutters, for example.

Each of the first and second layers can be a metal foil, such as aluminium foil, a metallized polymeric film or paper sheet, a plastics film of single or multiple layer construction, or any combination thereof. The first and second layers can be translucent or transparent, flexible sheets of plastics material such as polypropylene or polyethylene terephthalate, for example.

Any suitable adhesive can be used for the adhesive layer.

Any suitable release layer or coating can be used, e.g., a commercially-available silicone-based release layer that can be applied to a surface of the second layer.

The multi-layer product can be manufactured by welding at least part of the or each second portion to a respective one of the one or more first portions at one or more securing locations. Any suitable welding process can be used depending on the materials of the first and second layers, e.g., ultrasonic spot welding, friction welding or heat welding using a heat gun.

The multi-layer product can also be manufactured by selectively applying the release layer to the second layer such that it is absent from all or just part of the area overlying the or each second portion. Alternatively, the release layer can be applied to substantially all of the second layer and then selectively removed from all or just part of the area overlying the or each second portion. In one arrangement, the release layer can be removed by selectively applying a chemical such as a de-bonder or solvent to the release layer which removes, disperses or displaces the release layer in the applied areas corresponding to the one or more securing locations. Typically each area where the release layer is absent is also within the periphery of the associated first portion if it is smaller - otherwise the second portion will be fixedly secured to part of the first layer that lies outside the pre-formed lines of separation.

The multi-layer product can also be manufactured by selectively applying a chemical to the release layer to modify its chemical properties, i.e., to remove its "release" property in those areas to which the chemical is applied, or by selectively applying a coating to the release layer. The coating will adhere or bond to the release layer and will adhere firmly to the adhesive layer on contact. Typically each area to which the chemical or coating is applied is also within the periphery of the associated first portion if it is smaller - otherwise the second portion will be fixedly secured to part of the first layer that lies outside the pre-formed lines of separation.

The multi-layer product can be a self-adhesive label or a seal for use with a container for storing and dispensing consumer products, for example.

The multi-layer product can be a seal for use with a container for storing and dispensing consumer products comprising a tray having a generally planar top surface into which has been formed one or more discrete cavities for receiving the consumer products, the seal comprising:
a cover film to seal the one or more cavities to retain the consumer products in the one or more cavities when secured to the generally planar top surface of the tray, the cover film having pre-formed lines of separation defining a releasable portion per cavity;
a barrier film secured to the cover film, the barrier film having pre-formed lines of separation defining a barrier patch per releasable portion; and
an adhesive layer between the cover film and the barrier film;
wherein a release layer is provided between the barrier film and the adhesive layer; and
wherein at least part of the or each barrier patch is fixedly secured to a respective one of the one or more releasable portions at one or more securing locations.

As described above, the or each barrier patch is prevented from becoming detached from the associated releasable portion.

In one arrangement, the or each barrier patch can be fixedly secured to the associated releasable portion by welding them together at the one or more securing locations, e.g., using ultrasonic spot welding, friction welding or heat welding using a heat gun.

In another arrangement, the or each barrier patch can be fixedly secured to the associated releasable portion using the adhesive layer. This can be done by the release layer being absent at the one or more securing locations so that the or each barrier patch is firmly and directly adhered to the adhesive layer at each securing location, and hence by means of the adhesive layer, to the associated releasable portion.

In another arrangement, the or each barrier patch can be fixedly secured to the associated releasable portion using the adhesive layer and the release layer. This can be done by modifying the chemical properties of the release layer at the one or more securing locations, e.g., by selectively applying a chemical to the release layer, so that instead of releasing easily from the adhesive layer, those parts of the release layer to which the chemical is applied are firmly adhered to the adhesive layer. Since the release layer is firmly adhered to the barrier film, it means that the or each barrier patch is firmly adhered to the associated releasable portion by means of the adhesion between the release layer and the adhesive layer. This can also be done by selectively applying a coating to the release layer at the one or more securing locations. If the coating is firmly adhered to both the release layer and the adhesive layer, it means that the or each barrier patch is firmly adhered to the associated releasable portion by means of the adhesion between the release layer and the adhesive layer.

The or each barrier patch can be larger than the associated releasable portion.

The or each pre-formed line of separation in the barrier film can be formed by a pre-scored or pre-perforated tear line, a cut line, or a combination thereof. The or each pre-formed line of separation in the cover film can be formed by a pre-scored or pre-perforated tear line, a cut line, or a combination thereof.

The cover film can be a metal foil, such as aluminium foil, a metallized polymeric film or paper sheet, a plastics film of single or multiple layer construction, or any combination thereof, depending on the sort of consumer products to be stored and dispensed from the container. The cover film is preferably non-rupturable (except around any pre-formed tear lines) so that the consumer products cannot be accidentally or deliberately pushed through the cover film.

The barrier film can be a metal foil, such as aluminium foil, a metallized polymeric film or paper sheet, a plastics film of single or multiple layer construction, or any combination thereof, depending on the sort of consumer products to be stored and dispensed from the container. The cover film and the barrier film can be translucent or transparent, flexible sheets of plastics material such as polypropylene or polyethylene terephthalate, for example.

The or each barrier patch can be adapted to be peeled away from an overlapping region of the cover film between the pre-formed line of separation in the cover film and the periphery of the barrier patch when the associated releasable portion is released. The securing location(s) are preferably positioned only within the periphery of the associated smaller, overlying, releasable portion of the cover film.

In one arrangement, the or each releasable portion of the cover film can include a tab. The tab can be part of the or each releasable portion that is intended to be grasped by a user preparatory to releasing (and optionally completely removing) the releasable portion and its associated barrier patch - to which it is fixedly secured - from the remainder of the cover film. The tab can be defined by part of the or each releasable portion that is not fixedly secured to the associated barrier patch. In another arrangement, a separate tab can be fixedly adhered or laminated to the or each releasable portion of the cover film.

The seal can be manufactured in the same way as the multi-layered product as described above.

The present invention further provides a container for storing and dispensing consumer products according to claim 9.

The or each barrier patch can be larger than the associated releasable portion.

The or each pre-formed line of separation in the cover film can be formed by a pre-scored or pre-perforated tear line, a cut line, or a combination thereof.

If the cover film includes one or more tabs (either as part of the or each releasable portion or as one or more separate tab portions fixedly secured thereto) each tab can be upstanding or bent upwardly out of the plane of the remainder of the cover film so that it can be grasped easily by the user. The tab can be made to upstand or bend upwardly when the seal is applied to the tray by providing suitable pre-formed creases or folds in the cover film or tab portions.

The cover film prior to application to secure it to the generally planar top surface of the tray to retain the consumer products within the one or more cavities can have over the whole of its underside a barrier film secured thereto by the adhesive layer, the barrier film having pre-formed lines of separation defining a barrier patch per releasable portion, so that peeling away the majority of the barrier film immediately prior to application of the cover film to secure it to the generally planar top surface of the tray exposes the adhesive layer in areas necessary for adhesion to the tray but leaves the or each barrier patch attached to the underside of the cover film. The or each pre-formed line of separation in the barrier film can be formed by a pre-scored or pre-perforated tear line, a cut line, or a combination thereof.

The release layer would extend between the part of the barrier film that lies outside the barrier patches and the adhesive layer so that it allows the majority of the barrier film to be easily and cleanly peeled away from the adhesive layer.

Other features of the container seal can be as described above.

The container can be a multiple-compartment container for containing and dispensing medication according to a pre-defined dosage regimen.

### Drawings

Figure 1 is a top view of a moulded tray of a known multiple-compartment dispensing container;
Figure 2 is a top view of a cover film;
Figure 3 is a top view of a barrier film to be used in conjunction with the cover film of

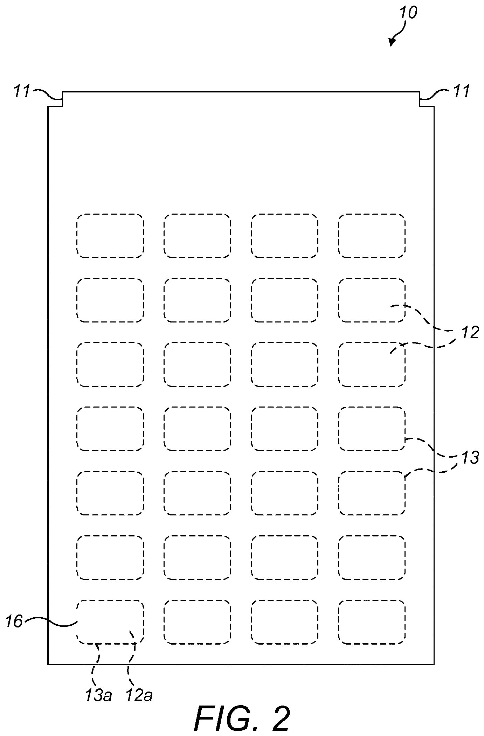

Figure 2 to form a seal according to the present invention;

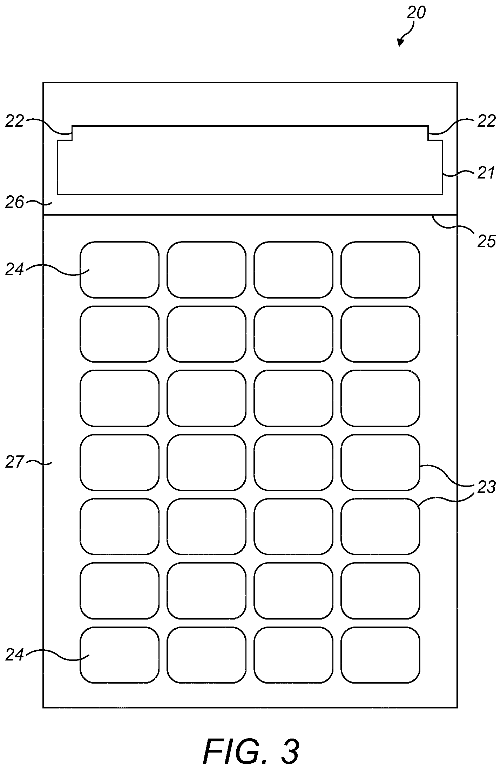

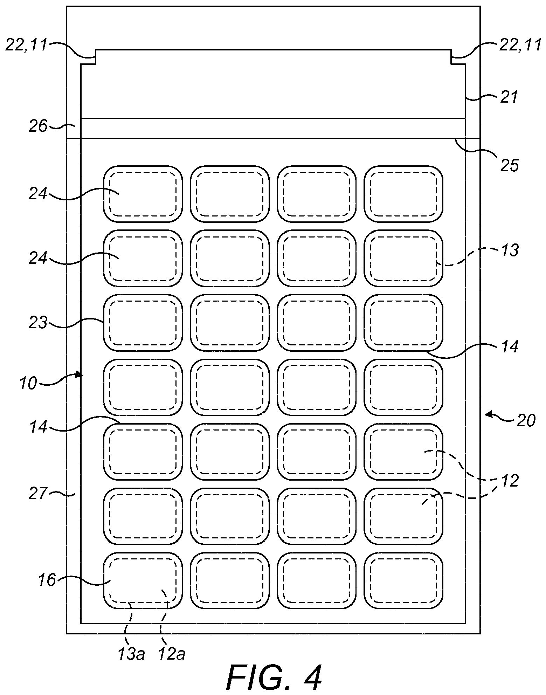

Figure 4 is a top view of a seal according to the present invention where the cover film of Figure 2 has been secured to the barrier film of Figure 3;

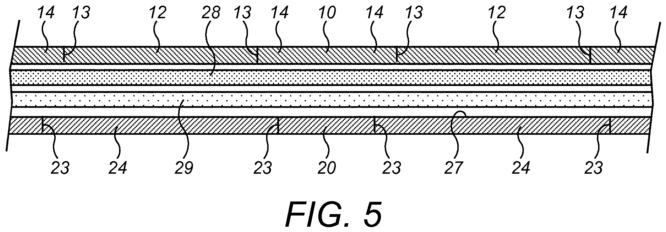

Figure 5 is a cross section of part of the seal of Figure 4;

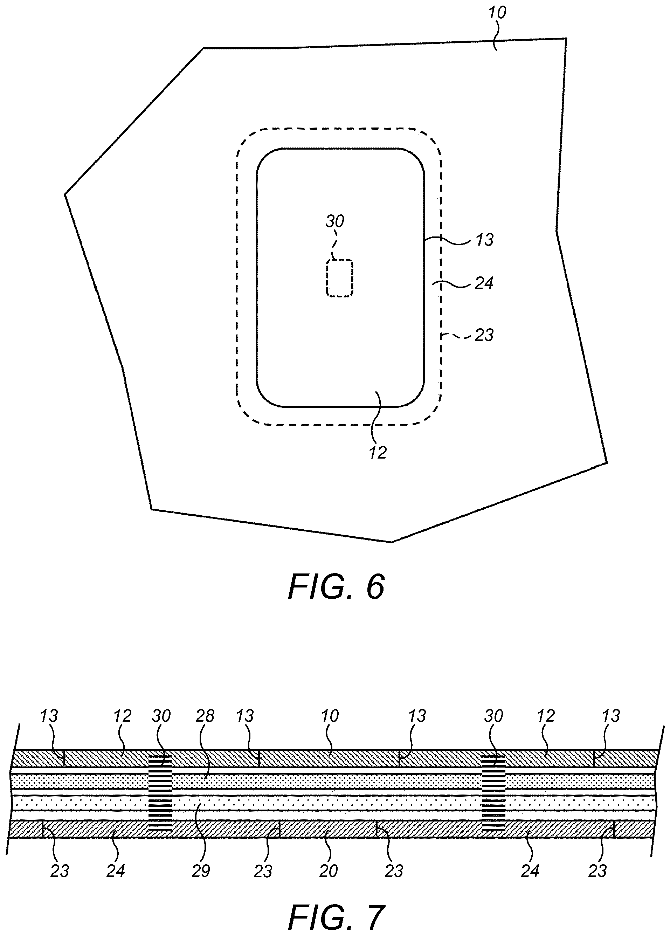

Figure 6 is a top view of part of a seal according to the present invention where each barrier patch is fixedly secured to the overlying releasable portion by a weld;
Figure 7 is a cross section of part of the seal of Figure 6;

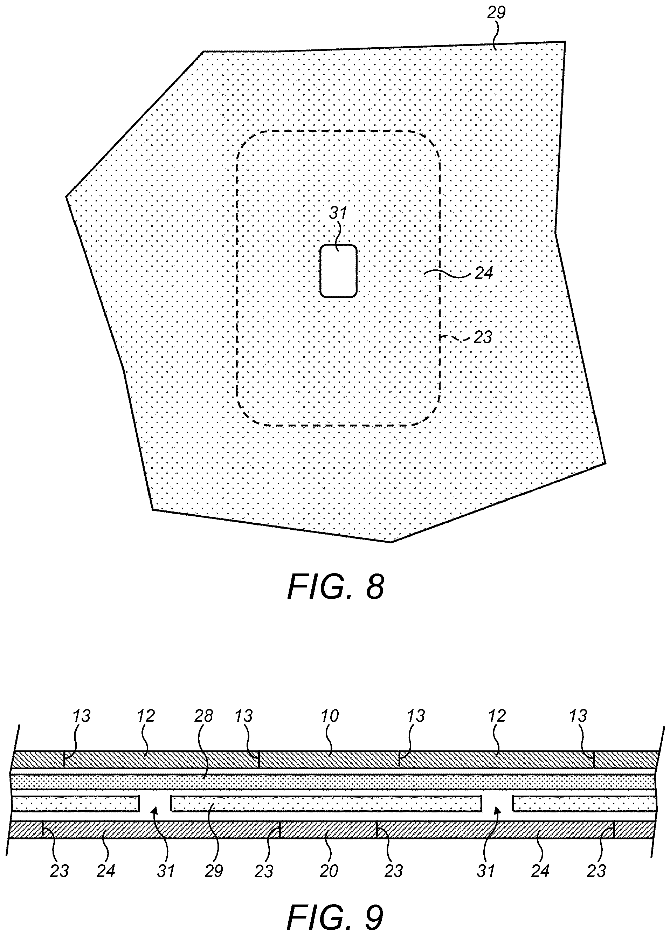

Figure 8 is a top view of a barrier film and applied release layer forming part of a seal according to the present invention where each barrier patch is fixedly secured to the overlying releasable portion by the adhesive layer because part of the release layer is absent;
Figure 9 is a cross section of part of the seal of Figure 8;

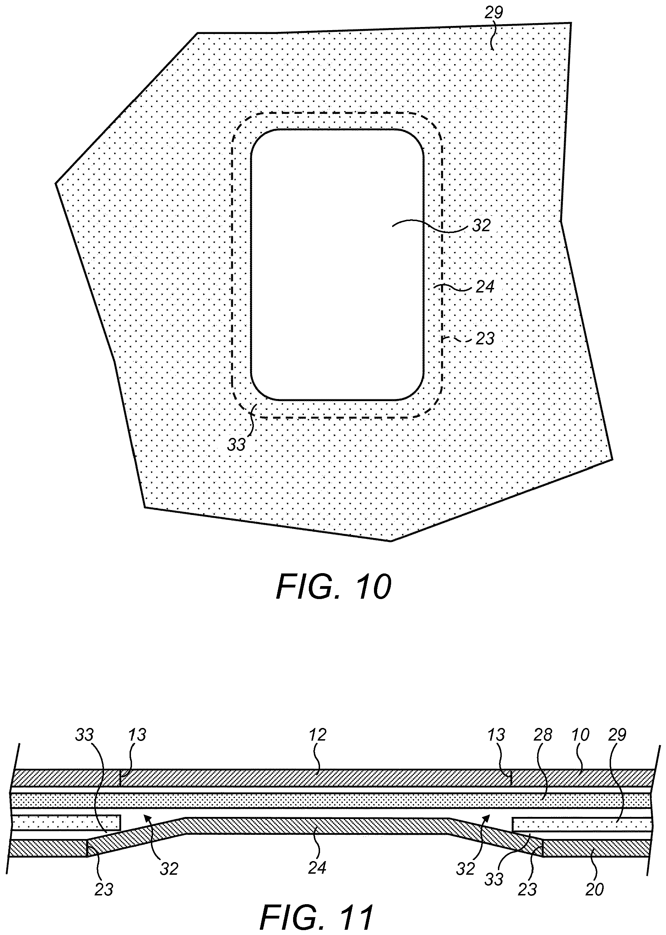

Figure 10 is a top view of a barrier film and alternative applied release layer forming part of a seal according to the present invention where each barrier patch is fixedly secured to the overlying releasable portion by the adhesive layer because part of the release layer is absent;
Figure 11 is a cross section of part of the seal of Figure 10;

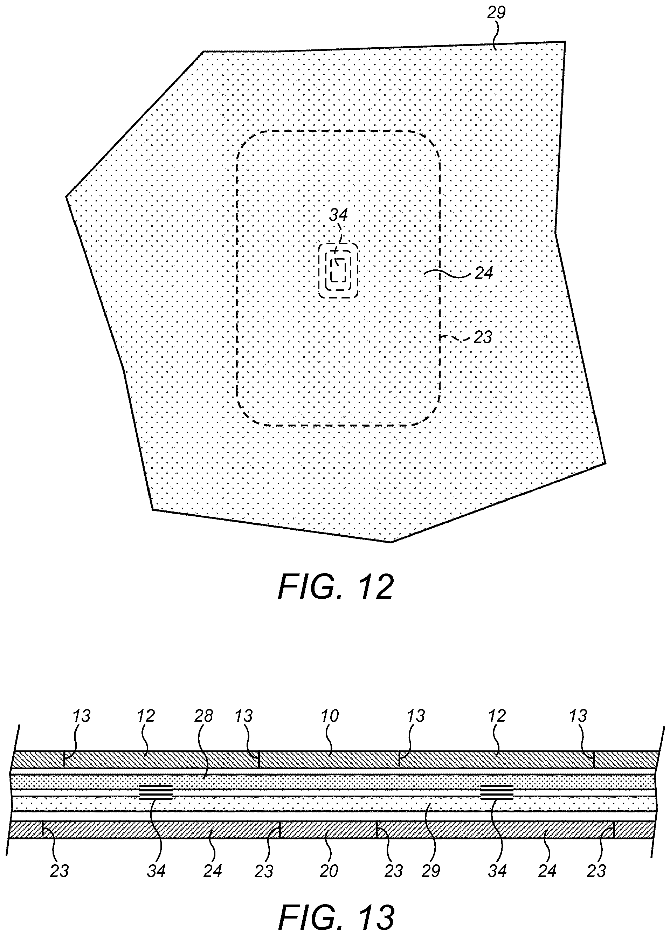

Figure 12 is a top view of a barrier film and alternative applied release layer forming part of a seal according to the present invention where each barrier patch is fixedly secured to the overlying releasable portion by the adhesive layer and the release layer because part of the release layer has modified properties;
Figure 13 is a cross section of part of the seal of Figure 12;

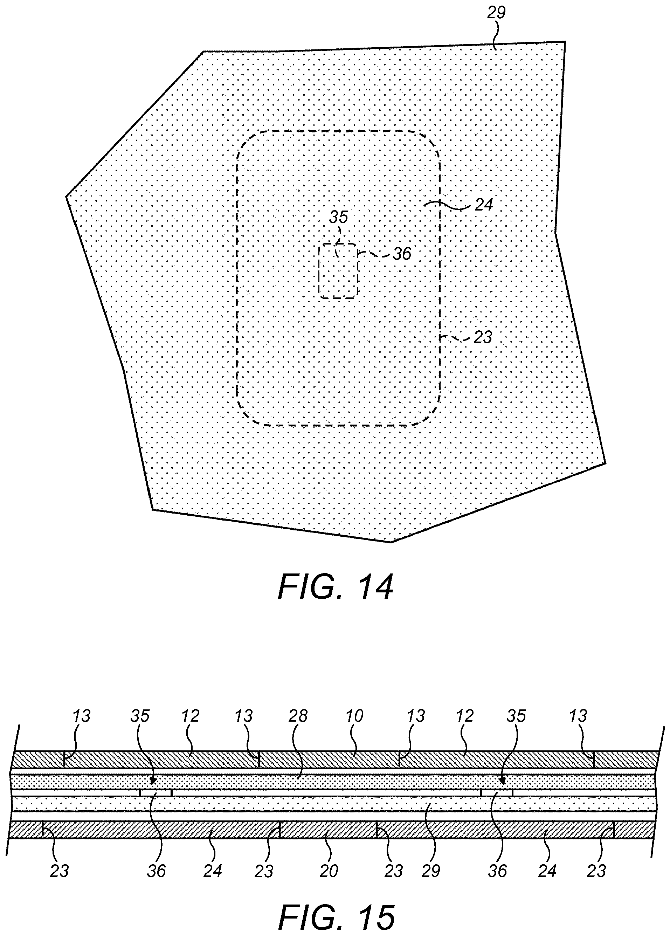

Figure 14 is a top view of a barrier film and alternative applied release layer forming part of a seal according to the present invention where each barrier patch is fixedly secured to the overlying releasable portion by the adhesive layer and the release layer because part of the release layer is coated;
Figure 15 is a cross section of part of the seal of Figure 14; and

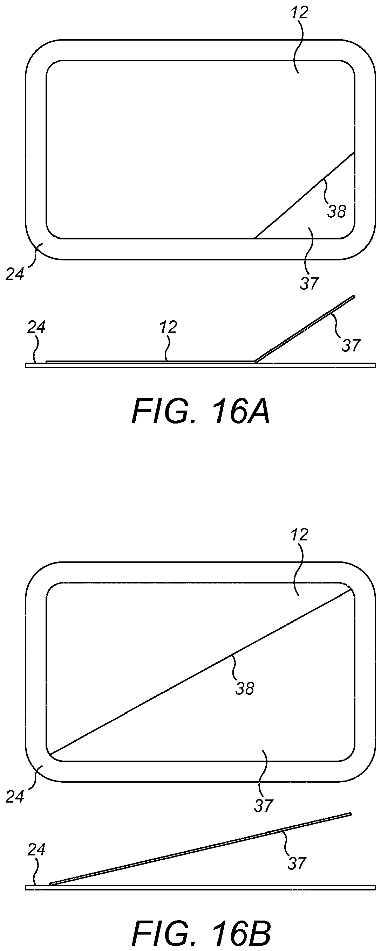

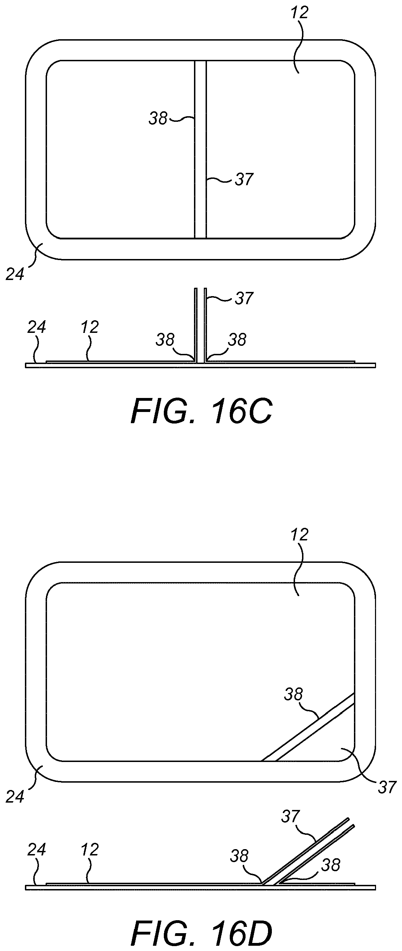

Figures 16A to 16F are top and cross section views of different tab constructions for a seal according to the present invention.

Although the following description relates to a seal for use with a container, it will be readily understood that the same features can be applied to other multi-layer products such as self-adhesive labels, for example.

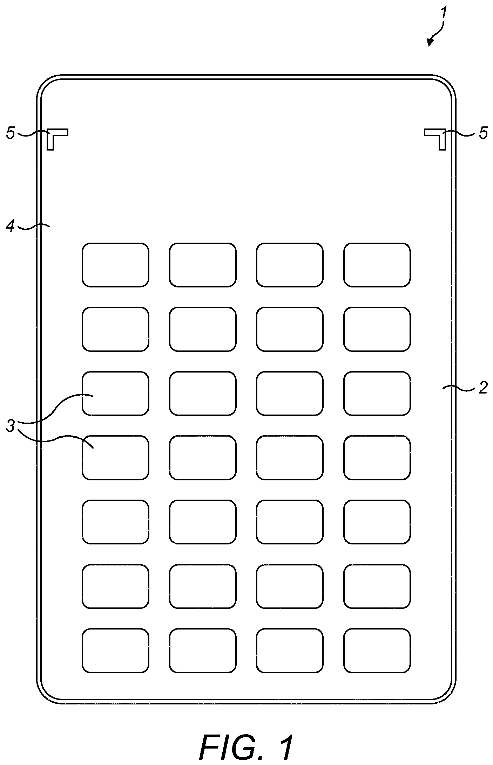

A container for storing and dispensing consumer products is shown in Figures 1 to 5 and includes a tray 1 having a generally planar top surface 2 into which has been formed an array of discrete cavities 3 for receiving the consumer products. A cover film 10 is adhered to the generally planar top surface of the tray 1 by a layer of adhesive 28 to seal the cavities 3 to retain the consumer products in the cavities. The cover film 10 has pre-formed lines of separation 13 defining a releasable portion 12 per cavity to retain the consumer products in that cavity until it is removed. The cover film 10 therefore has a corresponding array of releasable portions 12. Each line of separation 13 can be a tear line (e.g., a score line or perforation line) that must be torn or broken to release the releasable portion, or a cut line extending completely through the material of the cover film 10. Each releasable portion 12 of the cover film 10 has low vapour transmission properties in the area which in use overlies the associated cavity, those low vapour transmission properties being created by a barrier patch 24 with high vapour barrier properties shaped and sized to overlie the associated cavity. Each barrier patch 24 is adhered to the underside of the cover film 10 by the same layer of adhesive 28 as that which adheres the cover film to the top surface of the tray 1.

The array of barrier patches 24 can be created from a single sheet of barrier film 20 as follows. A single sheet of barrier film 20 is secured to the underside of the cover film 10 by the adhesive layer 28 to form a seal. The barrier film 20 has pre-formed lines of separation 23 (e.g., tear lines such as score lines or perforation lines, or cut lines) defining the periphery of each vapour-resistant barrier patch 24 so that peeling away the majority of the barrier film 20 from the cover film 10 immediately prior to application of the cover film to secure it to the generally planar top surface of the tray 1 exposes the adhesive 28 in areas necessary for adhesion to the tray. If the lines of separation 23 are tear lines they will tear when the barrier film 20 is removed to leave a barrier patch 24 attached to the underside of each releasable portion 12 of the cover film.

In a preferred arrangement, the barrier patches 24 are larger than the associated releasable portions 12 of the cover film 10 and are adhered to an overlapping region of the cover film between the pre-formed line of separation in the cover film and the periphery of the associated barrier patch. The barrier patches 24 are not adhered to the generally planar surface of the tray 1, but only to the cover film.

The barrier film 20 can have a further pre-defined tear line 25 (or cut line) close to one edge thereof to define a tear-off strip 26 which when removed exposes a location anchorage area of the adhesive on the underside of the cover film 10, for adhering an edge portion of the cover film 10 to an edge portion 4 of the tray 1 before peeling away the majority of the barrier film 20 and adhering the cover film over the cavities. To assist in the process of adhering the cover film 10 to the top surface of the tray, the tray 1 can have upstanding cover film location means 5. The cover film 10 can have cooperating means 11 for accurate location of the cover film over the tray 1 with the one or more cavities 3 and associated tear-off portions 12 in register before adhering the cover film to the tray.

The cover film 10 is secured to the tray 1 by the same layer of adhesive 28 that is used to secure the cover film to the barrier film 20. After the majority of the barrier film 20 has been peeled away from the cover film 10 to expose the adhesive, the cover film can be secured to the top surface of the tray 1.

In one arrangement, each releasable portion 12a is attached to the remainder of the cover film 10 by a bridge region 16 defined by a gap in the associated pre-formed line of separation. (Although in Figure 2 only one releasable portion 12a of this type is shown, it will be readily appreciated that in practice all of the releasable portions would include a similar bridge region if the seal has this particular "letterbox" construction.) This means that the line of separation 13a defining each releasable portion 12a in the cover film does not extend completely around the periphery of the associated cavity to form a closed loop. The ends of the line of separation 13a are separated by the bridge region 16. The releasable portion 12a will remain attached to the cover film 10 by means of the bridge region 16 when it separates along the associated line of separation 13a to define a "flap" that overlies the cavity. This might be considered to be more environmentally friendly than if the lines of separation extend completely around the periphery of the or each cavity because the individual releasable portions do not become fully detached from the cover film and do not need to be discarded each time the contents of a cavity are dispensed.

To dispense the contents of a particular cavity, the user simply presses down on the overlying releasable portion 12. If the line of separation 13 is a tear line (e.g., a score line or a perforation line) the application of a sufficient amount of force will cause it to tear such that the releasable portion 12 is fully released from the remainder of the cover film 10 or partially released apart from in the bridge region 16. The bridge region 16 acts as a hinge to allow the attached releasable portion 12a (or "flap") to bend downwardly into the cavity or upwardly to allow the contents of the cavity to be dispensed through the opening created in the cover film 10. Most of the barrier patch 24 adhered to the releasable portion will be peeled away from the overlapping region of the cover film 10 that surrounds the opening. However, a small portion of the barrier patch 24 that lies underneath the bridge region 16 may remain partially or loosely adhered to the cover film 10.

The preferred arrangement incorporates tamper evident properties because once a releasable portion 12 of the cover film 10 has been released, it cannot be easily repositioned over the associated cavity. This is because the barrier patch 24 is slightly larger than the releasable portion 12 such that the overlapping region 14 of the cover film 10 surrounding the opening (i.e., the part of the cover film from which the barrier patch 24 is peeled away when the releasable portion 12 is released from the cover film) will tend to adhere to the generally planar top surface of the tray once the adhesive is exposed. This makes it very difficult to slide the peripheral edge of the barrier patch 24 back between the cover film 10 and the top surface of the tray. Tamper evident properties are especially important if the container is used to store and dispense food and medication such as pills, tablets and capsules.

Figure 5 shows how a release layer or coating 29 is applied to the top surface 27 of the barrier film 20 to allow the majority of it to be easily and cleanly peeled away from the cover film 10. Any suitable release coating can be used. (It will be readily understood that in Figures 5, 7, 9 and 11 the layers of the seal are shown exaggerated and spaced slightly apart for improved clarity. In a practical seal, each of the respective layers will have a suitable thickness and adjacent layers will be in contact with each other.)

Figures 6 and 7 show how each barrier patch 24 is fixedly secured to the overlying releasable portion 12 of the cover film 10 by welding. In Figure 6 the line of separation 23 defining the periphery of one of the barrier patches 24 is shown as if it were visible through the cover film - which is possible in practice if the seal layers, including the adhesive and release layers, are transparent or translucent. Ultrasonic spot welding can be used, for example. The weld 30 extends through the adhesive layer 28 and the release layer 29 to physically secure each barrier patch 24 to the overlying releasable portion 12. The weld 30 represents a securing location. Although only one weld 30 is shown, it will be readily appreciated that each barrier patch 24 can be welded to the overlying releasable portion 12 at two or more spaced securing locations if appropriate.

Figure 8 shows part of the release layer 29. The overlying adhesive layer and the cover film have been omitted for improved clarity. The line of separation 23 defining the periphery of one of the barrier patches 24 is shown as if it were visible through the release layer 29. It will be readily appreciated that the overlying releasable portion 12 of the cover film is smaller than the barrier patch 24.

The release layer 29 includes a securing location 31. A similar securing location 31 is provided in the release layer 29 for each barrier patch 24. The securing location 31 is shown to be located generally in the centre of the barrier patch 24 but it can be provided anywhere within the periphery of the overlying releasable portion 12 (not shown in Figure 8). Although only one securing location 31 is shown, it will be readily appreciated that each barrier patch 24 can be fixedly secured to the overlying releasable portion 12 at two or more spaced securing locations if appropriate.

Each securing location 31 is formed by selectively applying the release layer 29 to just certain parts of the top surface 27 of the barrier film 20, or by applying the release layer over substantially the whole of the top surface 27 of the barrier film 20 and then selectively removing it, e.g., by selectively applying a chemical to the release layer to remove or disperse part of the release layer. In each case, the release layer 29 is absent in those parts that define each securing location 31. Each barrier patch 24 is therefore effectively adhered to the adhesive layer 28 at each securing location 31 and cannot be easily released from it because there is no interposing release layer. Such adhesion between the barrier patch and the adhesive layer 28 is sufficient to prevent the barrier patch from becoming detached from the releasable portion during normal usage of the seal, e.g., if the releasable portion and barrier patch are fully detached when the contents of a particular cavity are dispensed, or in the case of a "letterbox" construction, if the releasable portion 12a remains attached to the remainder of the cover film 10 by a bridge region 16 defined by a gap in the associated pre-formed line of separation 13a.

As shown in Figures 8 and 9, the release layer 29 can be absent in one or more small areas within the periphery of each barrier patch 24 so that each barrier patch is effectively adhered to the adhesive layer at one or more spaced securing locations. Alternatively, the release layer 29 can be absent over substantially all of the area within the periphery of each releasable portion 12 so that each underlying barrier patch 24 is effectively firmly adhered to the adhesive layer across the substantially the whole of its surface area apart from the peripheral region that is released from an overlapping region of the cover film 10. This is shown in Figures 10 and 11 where the release layer 29 has been removed over a large area to define a larger securing location 32. The securing location 32 extends substantially to the periphery of the overlying releasable portion 12. The release layer 29 is still present in a peripheral region 33 of the barrier patch 24 which is released from an overlapping region of the cover film 12 that surrounds the overlying releasable portion 12. Figure 11 shows how almost the whole of the barrier patch 24 is effectively firmly adhered to the adhesive layer 28 with only its peripheral region 33 being in contact with the release layer 29.

Figure 12 shows part of the release layer 29. The overlying adhesive layer and the cover film have been omitted for improved clarity. The line of separation 23 defining the periphery of one of the barrier patches 24 is shown as if it were visible through the release layer 29. It will be readily appreciated that the overlying releasable portion 12 of the cover film is smaller than the barrier patch 24.

The release layer 29 includes a securing location 34. A similar securing location 34 is provided in the release layer 29 for each barrier patch 24. The securing location 34 is shown to be located generally in the centre of the barrier patch 24 but it can be provided anywhere within the periphery of the overlying releasable portion 12 (not shown in Figure 12). Although only one securing location 34 is shown, it will be readily appreciated that each barrier patch 24 can be fixedly secured to the overlying releasable portion 12 at two or more spaced securing locations if appropriate.

Each securing location 34 is formed by selectively applying a chemical to modify the release properties of the release layer 29. This means that the release layer 29 is adhered to the adhesive layer 28 at each securing location 34. Each barrier patch 24 is therefore effectively adhered to the adhesive layer 28 at each securing location 34 by means of the release layer 29. Such adhesion between the barrier patch and the adhesive layer 28 is sufficient to prevent the barrier patch from becoming detached from the releasable portion during normal usage of the seal, e.g., if the releasable portion and barrier patch are fully detached when the contents of a particular cavity are dispensed, or in the case of a "letterbox" construction, if the releasable portion 12a remains attached to the remainder of the cover film 10 by a bridge region 16 defined by a gap in the associated pre-formed line of separation 13a.

Figure 14 shows part of the release layer 29. The overlying adhesive layer and the cover film have been omitted for improved clarity. The line of separation 23 defining the periphery of one of the barrier patches 24 is shown as if it were visible through the release layer 29. It will be readily appreciated that the overlying releasable portion 12 of the cover film is smaller than the barrier patch 24.

The release layer 29 includes a securing location 35. A similar securing location 35 is provided in the release layer 29 for each barrier patch 24. The securing location 35 is shown to be located generally in the centre of the barrier patch 24 but it can be provided anywhere within the periphery of the overlying releasable portion 12 (not shown in Figure 14). Although only one securing location 35 is shown, it will be readily appreciated that each barrier patch 24 can be fixedly secured to the overlying releasable portion 12 at two or more spaced securing locations if appropriate.

Each securing location 35 is formed by selectively applying a chemical to coat the release layer 29. The release layer 29 is adhered or bonded to the applied coating 36, which in turn is adhered to the adhesive layer 28 at each securing location 35. Each barrier patch 24 is therefore effectively adhered to the adhesive layer 28 at each securing location 35 by means of the coated release layer 29. Such adhesion between the barrier patch and the adhesive layer 28 is sufficient to prevent the barrier patch from becoming detached from the releasable portion during normal usage of the seal, e.g., if the releasable portion and barrier patch are fully detached when the contents of a particular cavity are dispensed, or in the case of a "letterbox" construction, if the releasable portion 12a remains attached to the remainder of the cover film 10 by a bridge region 16 defined by a gap in the associated pre-formed line of separation 13a.

Figures 16A to 16F show different tab constructions for the seal of the present invention. In each case, only a single barrier patch and overlying releasable portion are shown.

In the constructions shown in Figures 16A to 16D, the tab 37 is formed integrally as part of the releasable portion 12 of the cover film 10. The tab 37 extends upwardly away from the underlying barrier patch 24 so that it can be grasped easily by the user. The tab 37 can be made to upstand or bend upwardly when the seal is applied to the generally planar top surface 2 of the tray 1 by suitable pre-formed creases or folds 38 in the cover film 10.

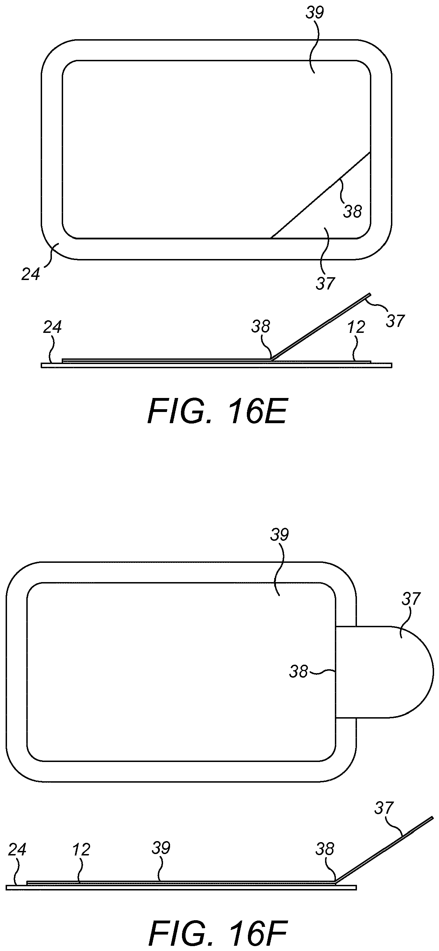

In the constructions shown in Figures 16E and 16F, the tab is adhered to the releasable portion 12. In particular, the tab 37 is part of an additional tab portion 39 that is fixedly secured or laminated onto each releasable portion 12. The tab 37 can be made to upstand or bend upwardly when the seal is applied to the generally planar top surface 2 of the tray 1 by suitable pre-formed creases or folds 38 in the tab portion 39.

## Claims

1. A multi-layer product comprising:
a first layer (10) having pre-formed lines of separation (13) defining one or more first portions (12);
a second layer (20) having pre-formed lines of separation (23) defining one or more second portions (24); and
an adhesive layer (28) between the first and second layers (10, 20);
**characterised in that** a release layer (29) is provided between the second layer (20) and the adhesive layer (28); and
at least part of the or each second portion (24) is fixedly secured to a respective one of the one or more first portions (12) at one or more securing locations (30; 31; 32, 34; 35).

2. A multi-layer product according to claim 1, wherein the first and second portions (12, 24) are fixedly secured by welding at the one or more securing locations (30).

3. A multi-layer product according to claim 1, wherein the release layer (29) is absent, modified or coated at the one or more securing locations (31; 32; 34; 35) so that the first and second portions (12, 24) are fixedly secured by the adhesive layer (28).

4. A multi-layer product according to any preceding claim, wherein the or each pre-formed line of separation (13) in the first layer (10) is formed by a pre-scored or pre-perforated tear line, a cut line, or a combination thereof.

5. A multi-layer product according to any preceding claim, wherein the or each pre-formed line of separation (23) in the second layer (20) is formed by a pre-scored or pre-perforated tear line, a cut line, or a combination thereof.

6. A multi-layer product according to any preceding claim, wherein the first layer (10) is a metal foil, such as aluminium foil, a metallized polymeric film or paper sheet, a plastics film of single or multiple layer construction, or any combination thereof.

7. A multi-layer product according to any preceding claim, wherein the second layer (20) is a metal foil, such as aluminium foil, a metallized polymeric film or paper sheet, a plastics film of single or multiple layer construction, or any combination thereof.

8. A multi-layer product according to any preceding claim, being a self-adhesive label or a seal for use with a container for storing and dispensing consumer products.

9. A container for storing and dispensing consumer products, comprising:
a tray (1) having a generally planar top surface (2) into which has been formed one or more discrete cavities (3) for receiving the consumer products; and
a seal comprising a cover film (10) secured to the generally planar top surface (2) of the tray (1) by an adhesive layer (28) to seal the one or more cavities (3) to retain the consumer products in the one or more cavities (3), the cover film (10) having pre-formed lines of separation (13) defining a releasable portion (12) per cavity; and
a barrier patch (24) per releasable portion (12);
**characterised in that** a release layer (29) is provided between the or each barrier patch (24) and the adhesive layer (28); and
at least part of the or each barrier patch (24) is fixedly secured to a respective one of the one or more releasable portions (12) at one or more securing locations (30; 31; 32, 34; 35).

10. A container according to claim 9, wherein the or each barrier patch (24) is fixedly secured to the associated releasable portion (12) by welding at the one or more securing locations (30).

11. A container according to claim 10, wherein the release layer (29) is absent, modified or coated at the one or more securing locations (31; 32, 34; 35) so that the or each barrier patch (24) is fixedly secured to the associated releasable portion (12) by the adhesive layer (28).

12. A container according to any of claims 9 to 11, wherein the or each releasable portion (12) of the cover film (10) includes a tab (37).

13. A container according to claim 12, wherein the tab (37) is part of the or each releasable portion (12).

14. A container according to claim 12, wherein the tab (37) is fixedly adhered or lamination to the or each releasable portion (12).

15. A container according to any of claims 9 to 14, being a multiple-compartment container for containing and dispensing medication according to a pre-defined dosage regimen.

## Patentansprüche

1. Mehrschichtiges Produkt, umfassend:
eine erste Schicht (10), die vorgeformte Separationslinien (13) aufweist, die einen oder mehrere erste Abschnitte (12) definieren;
eine zweite Schicht (20), die vorgeformte Separationslinien (23) aufweist, die einen oder mehrere zweite Abschnitte (24) definieren; und
eine Klebeschicht (28) zwischen der ersten und zweiten Schicht (10, 20); **dadurch gekennzeichnet, dass** eine Abtrennschicht (29) zwischen der zweiten Schicht (20) und der Klebeschicht (28) bereitgestellt ist; und
mindestens ein Teil des oder jedes zweiten Abschnitts (24) ortsfest an einem jeweiligen des einen oder der mehreren ersten Abschnitte (12) an einer oder mehreren Befestigungsstellen (30; 31; 32, 34; 35) befestigt ist.

2. Mehrschichtiges Produkt nach Anspruch 1, wobei der erste und der zweite Abschnitt (12, 24) durch Schweißen an einer oder mehreren Befestigungsstellen (30) ortsfest befestigt sind.

3. Mehrschichtiges Produkt nach Anspruch 1, wobei die Abtrennschicht (29) an der einen oder den mehreren Befestigungsstellen (31; 32; 34; 35) fehlt, modifiziert oder beschichtet ist, so dass der erste und zweite Abschnitt (12, 24) ortsfest durch die Klebeschicht (28) befestigt ist.

4. Mehrschichtiges Produkt nach einem der vorstehenden Ansprüche, wobei die oder jede vorgeformte Separationslinie (13) in der ersten Schicht (10) durch eine vorgestanzte oder vorperforierte Abrisslinie, eine Schnittlinie oder eine Kombination davon gebildet wird.

5. Mehrschichtiges Produkt nach einem der vorstehenden Ansprüche, wobei die oder jede vorgeformte Separationslinie (23) in der zweiten Schicht (20) durch eine vorgestanzte oder vorperforierte Abrisslinie, eine Schnittlinie oder eine Kombination davon gebildet wird.

6. Mehrschichtiges Produkt nach einem der vorstehenden Ansprüche, wobei die erste Schicht (10) eine Metallfolie, wie z.B. Aluminiumfolie, ein metallisierter Polymerfilm oder ein Papierblatt, ein Kunststofffilm mit ein- oder mehrschichtigem Aufbau oder irgendeine Kombination davon ist.

7. Mehrschichtiges Produkt nach einem der vorstehenden Ansprüche, wobei die zweite Schicht (20) eine Metallfolie, wie z.B. Aluminiumfolie, ein metallisierter Polymerfilm oder ein Papierblatt, ein Kunststofffilm mit ein- oder mehrschichtigem Aufbau oder irgendeine Kombination davon ist.

8. Mehrschichtiges Produkt nach einem der vorstehenden Ansprüche, bei dem es sich um ein selbstklebendes Etikett oder eine selbstklebende Versiegelung zur Verwendung mit einem Behälter zur Lagerung und Abgabe von Verbrauchsgütern handelt.

9. Behälter zur Lagerung und Abgabe von Verbrauchsgütern, umfassend:
eine Schale (1), aufweisend eine im Allgemeinen ebenflächige Oberseite (2), in die einer oder mehrere diskrete Hohlräume (3) zur Aufnahme der Verbrauchsgüter eingeformt wurden; und
eine Versiegelung, umfassend einen Abdeckfilm (10), der an der im Allgemeinen ebenflächigen oberen Oberfläche (2) der Schale (1) durch eine Klebeschicht (28) befestigt ist, um den einen oder die mehreren Hohlräume (3) zu versiegeln, um die Verbrauchsgüter in dem einen oder den mehreren Hohlräumen (3) aufzubewahren, wobei der Abdeckfilm (10) vorgeformte Separationslinien (13) aufweist, die einen abtrennbaren Abschnitt (12) pro Hohlraum definieren; und
ein Sperrschicht-Patch (24) pro abtrennbarem Abschnitt (12);
**dadurch gekennzeichnet, dass** eine Abtrennschicht (29) zwischen dem oder jedem Sperrschicht-Patch (24) und der Klebeschicht (28) bereitgestellt ist; und
mindestens ein Teil des oder jedes Sperrschicht-Patches (24) ortsfest an einem jeweiligen des einen oder der mehreren ersten Abschnitte (12) an einer oder mehreren Befestigungsstellen (30; 31; 32, 34; 35) befestigt ist.

10. Behälter nach Anspruch 9, wobei das oder jedes Sperrschicht-Patch (24) ortsfest an dem zugehörigen abtrennbaren Abschnitt (12) durch Schweißen an der einen oder mehreren Befestigungsstellen (30) befestigt ist.

11. Behälter nach Anspruch 10, wobei die Abtrennschicht (29) an der einen oder den mehreren Befestigungsstellen (31; 32, 34; 35) fehlt, modifiziert oder beschichtet ist, so dass das oder jedes Sperrschicht-Patch (24) durch die Klebeschicht (28) ortsfest an dem zugehörigen abtrennbaren Abschnitt (12) befestigt ist.

12. Behälter nach einem der Ansprüche 9 bis 11, wobei der oder jeder abtrennbare Abschnitt (12) des Abdeckfilms (10) eine Lasche (37) einschließt.

13. Behälter nach Anspruch 12, wobei die Lasche (37) Teil des oder jedes abtrennbaren Abschnitts (12) ist.

14. Behälter nach Anspruch 12, wobei die Lasche (37) ortsfest an den oder jeden abtrennbaren Abschnitt (12) angeklebt oder Lamination ist.

15. Behälter nach einem der Ansprüche 9 bis 14, wobei es sich um einen Mehrkammerbehälter zur Lagerung und Abgabe von Medikamenten nach einem vordefinierten Dosierungsschema handelt.

## Revendications

1. Produit multicouche comprenant :
une première couche (10) présentant des lignes de séparation préformées (13) définissant une ou plusieurs premières parties (12) ;
une seconde couche (20) présentant des lignes de séparation préformées (23) définissant une ou plusieurs secondes parties (24) ; et
une couche adhésive (28) entre les première et seconde couches (10, 20) ;
**caractérisé en ce qu'**une couche de dégagement (29) est prévue entre la seconde couche (20) et la couche adhésive (28) ; et
au moins une partie de la ou de chaque seconde partie (24) est fixée solidement à une respective parmi l'une ou plusieurs premières parties (12) au niveau d'un ou plusieurs emplacements de fixation (30 ; 31 ; 32, 34 ; 35).

2. Produit multicouche selon la revendication 1, dans lequel les première et seconde parties (12, 24) sont fixées solidement par soudage au niveau de l'un ou plusieurs emplacements de fixation (30).

3. Produit multicouche selon la revendication 1, dans lequel la couche de dégagement (29) est absente, modifiée ou enduite au niveau de l'un ou plusieurs emplacements de fixation (31 ; 32 ; 34; 35) de sorte que les première et seconde parties (12, 24) soient fixées solidement par la couche adhésive (28).

4. Produit multicouche selon une quelconque revendication précédente, dans lequel la ou chaque ligne de séparation préformée (13) dans la première couche (10) est formée par une ligne de déchirure prédécoupée ou préperforée, une ligne de découpe ou une combinaison de celles-ci.

5. Produit multicouche selon une quelconque revendication précédente, dans lequel la ou chaque ligne de séparation préformée (23) dans la seconde couche (20) est formée par une ligne de déchirure prédécoupée ou préperforée, une ligne de découpe ou une combinaison de celles-ci.

6. Produit multicouche selon une quelconque revendication précédente, dans lequel la première couche (10) est une feuille métallique, telle qu'une feuille d'aluminium, un film polymérique métallisé ou une feuille de papier, un film plastique de construction à une ou à multiples couches, ou une quelconque combinaison de ceux-ci.

7. Produit multicouche selon une quelconque revendication précédente, dans lequel la seconde couche (20) est une feuille métallique, telle qu'une feuille d'aluminium, un film polymérique métallisé ou une feuille de papier, un film plastique de construction à une ou à multiples couches, ou une quelconque combinaison de ceux-ci.

8. Produit multicouche selon une quelconque revendication précédente, étant une étiquette auto-adhésive ou un joint à utiliser avec un contenant pour le stockage et la distribution de produits de consommation.

9. Contenant pour le stockage et la distribution de produits de consommation, comprenant :
un plateau (1) présentant une surface supérieure généralement plane (2) à l'intérieur de laquelle a/ont été formée(s) une ou plusieurs cavités (3) discrètes pour recevoir les produits de consommation ; et
un joint comprenant un film de recouvrement (10) fixé à la surface supérieure généralement plane (2) du plateau (1) par une couche adhésive (28) pour sceller l'une ou plusieurs cavités (3) pour retenir les produits de consommation dans l'une ou plusieurs cavités (3), le film de recouvrement (10) présentant des lignes de séparation préformées (13) définissant une partie pouvant être dégagée (12) par cavité ; et
une bande de protection (24) par partie pouvant être dégagée (12) ;
**caractérisé en ce qu'**une couche de dégagement (29) est prévue entre la ou chaque bande de protection (24) et la couche adhésive (28) ; et
au moins une partie de la ou de chaque bande de protection (24) est fixée solidement à une respective parmi l'une ou plusieurs parties pouvant être dégagées (12) au niveau d'un ou plusieurs emplacements de fixation (30 ; 31 ; 32, 34 ; 35).

10. Contenant selon la revendication 9, dans lequel la ou chaque bande de protection (24) est fixée solidement à la partie pouvant être dégagée (12) associée par soudage au niveau de l'un ou plusieurs emplacements de fixation (30).

11. Contenant selon la revendication 10, dans lequel la couche de dégagement (29) est absente, modifiée ou enduite au niveau de l'un ou plusieurs emplacements de fixation (31 ; 32, 34; 35) de sorte que la ou chaque bande de protection (24) soit fixée solidement à la partie pouvant être dégagée (12) associée par la couche adhésive (28).

12. Contenant selon l'une quelconque des revendications 9 à 11, dans lequel la ou chaque partie pouvant être dégagée (12) du film de recouvrement (10) inclut une languette (37).

13. Contenant selon la revendication 12, dans lequel la languette (37) fait partie de la ou de chaque partie pouvant être dégagée (12).

14. Contenant selon la revendication 12, dans lequel la languette (37) est collée solidement ou lamination à la ou à chaque partie pouvant être dégagée (12).

15. Contenant selon l'une quelconque des revendications 9 à 14, étant un contenant à multiples compartiments pour contenir et distribuer des médicaments selon un régime posologique prédéfini.
